# EUROPÄISCHE PATENTSCHRIFT

(11) **EP 2 809 624 B1**
(45) Veröffentlichungstag und Bekanntmachung des Hinweises auf die Patenterteilung: **17.05.2017**
(21) Anmeldenummer: 13702572.2
(22) Anmeldetag: 28.01.2013
(51) Int. Cl.: C03B 9/41, G01B 11/24

(54) **VERFAHREN ZUR REGELUNG DER PROZESSPARAMETER EINER GLASFORMMASCHINE**
METHOD FOR REGULATING THE PROCESS PARAMETERS OF A GLASSFORMING MACHINE
MÉTHODE DE RÉGULATION DE PARAMÈTRES UTILISÉS DANS UNE MACHINE À FORMER DES OBJETS EN VERRE

(30) Priorität: 03.02.2012 DE 102012002016
(43) Veröffentlichungstag der Anmeldung: 10.12.2014
(73) Patentinhaber: Heye International GmbH, 31683 Obernkirchen (DE)
(72) Erfinder: KELLNER, Michael, 32105 Bad Salzuflen (DE); SCHÖTTELNDREIER, Ralf, 31688 Nienstädt (DE); BINDEWALD, Kai, 31655 Stadthagen (DE); FIEDLER, Roland, 07646 Laasdorf (DE)
(74) Vertreter: Sobisch, Peter
(86) Internationale Anmeldenummer: PCT/EP2013/000236
(87) Internationale Veröffentlichungsnummer: WO 2013/113486

(56) Entgegenhaltungen:
- DE-A1- 2 922 499
- DE-A1- 10 116 099
- US-A1- 2004 194 506

## Beschreibung

Die Erfindung bezieht sich auf ein Verfahren zur Regelung der Prozeßparameter des Arbeitsprozesses einer Glasformmaschine, insbesondere einer I.S.-Maschine.

Die Herstellung von Hohlglasartikeln in einer Glasformmaschine ausgehend von einer Glasschmelze über einen Formgebungsprozess, der an einem vorab gebildeten Glastropfen mittels einer der Bildung eines Rohlings dienenden Vorform und einer der Bildung eines Fertigproduktes dienenden Fertigform vollzogen wird und dieses über eine Absetzplatte auf ein in einen Kühlofen einführendes Förderband überführt, ist durch mehrere Stationen sowie Transportvorgänge gekennzeichnet, deren jeweilige Betriebsparameter mit Hinblick auf ein reproduzierbares Herstellungsergebnis von konstanter Qualität einstellbar sein müssen und zu überwachen sind. Dies gilt für sämtliche den Formgebungsprozess beeinflussende Parameter.

Die Qualität des auf diesem Wege hergestellten Hohlglasartikels hängt insbesondere ab von der Stabilität der Gesamtheit aller Maschineneinstellungen, der Umgebungsbedingungen, den Eigenschaften des zu verarbeitenden Glastropfens und des herzustellenden Artikels, u. a. dessen Gestalt sowie der dementsprechenden Massenverteilung des Glases. Von verschleißbedingten Änderungen an Maschinenelementen, jedoch auch von umgebungsbedingten Temperaturschwankungen gehen weitere unvermeidbare störende Einflüsse aus, denen häufig durch manuelle Eingriffe in Betriebsabläufe begegnet werden muss. Manuelle Eingriffe sind jedoch stets von der persönlichen Erfahrung des jeweils Handelnden abhängig, wobei Maschineneinstellungen regelmäßig unter Wahrung von Sicherheitsabständen zu kritischen Einstellungen vorgenommen werden. Dies ist in vielen Fällen mit einer nur unvollkommenen Ausnutzung der Produktionskapazität und damit einer Minderung des Durchsatzes an Artikeln verbunden. Die Sicherstellung einer gleichbleibenden Produktqualität und die möglichst vollständige Nutzung der Produktionskapazität sind daher vorrangige Aufgaben für den Betrieb einer Glasformmaschine.

Aus der DE 10 2006 003 330 A1 ist es bekannt, eine Glasformmaschine mit einer entlang der mehreren Stationen beweglich angeordneten Thermokamera auszurüsten, mit dem Ziel, von den einzelnen Vor- und Fertigformwerkzeugen Wärmebilder zu generieren, die in einer Steuervorrichtung einer Kühlvorrichtung zur Darstellung von Regelgrößen umsetzbar sind, so dass den einzelnen Formwerkzeugen, und zwar sowohl vor- als auch fertigformseitig individuell angepasste Kühlluftströme zugeführt werden können. Auf diese Weise sollen die Umformbedingungen in den Formwerkzeugen vergleichmäßigt, stabilisiert und optimiert werden, so dass eine gleichmäßige Masseverteilung des Glases im hergestellten Glasartikel, eine Reduzierung der erforderlichen Kühlluftmenge und verlängerte Standzeiten für die Formwerkzeuge erreichbar sind. Ausgangspunkt für die Darstellung der Regelgrößen sind in der Steuervorrichtung gespeicherte Sollwerte für die Temperatur der Formwerkzeuge, so dass die jeweiligen Kühlluftströme nach Maßgabe der Abweichung von diesem Sollwerten bemessen werden. Es handelt sich hierbei um einen klassischen Regelkreis, mit dem jedoch nur ein Teilaspekt, nämlich die Temperaturverhältnisse der Formwerkzeuge erfasst werden.

Ein ähnliches Verfahren ist aus der EP 0 151 339 B1 bekannt, wobei zur Beschleunigung der bildlichen Erfassung der Temperaturverhältnisse der Formwerkzeuge eine Thermokamera um eine vertikale Achse schwenkbar angeordnet ist und jeweils zwei Stationen der Glasformmaschine erfassen kann.

Das aus der DE 37 42 501 C2 bekannte Verfahren zur Steuerung einer Glasformmaschine ist dadurch gekennzeichnet, dass fertige Hohlglasartikel nach erfolgter Abkühlung auf ein Vorhandensein von Fehlern wie z. B. Spalt- oder Rissfehlern hin untersucht werden, wobei ein den festgestellten Fehler beschreibendes Fehlersignal generiert wird, die Fehlersignale gemäß vorbestimmten gespeicherten Korrekturalgorithmen analysiert werden und die Betriebsparameter der Glasformmaschine nach diesen Algorithmen korrigiert werden. Diese Korrektur wird unter Zugrundelegung einer von der Herstell- und Kühlzeit abhängigen Zeitverzögerung wiederholt. Korrekturmaßnahmen werden hinsichtlich der Parameter des Blasprozesses der jeweiligen Form durchgeführt und beziehen sich auf Druckänderungen, beispielsweise den Setzblasdruck, den Endblasdruck, auf Änderungen der Blaszeit, beispielsweise der Setzblaszeit, der Endblaszeit usw. und auf Temperaturen, beispielsweise betreffend eine Glasausflusstemperatur. Es handelt sich hierbei um ein automatisch ablaufendes, iteratives Korrekturverfahren, mittels welchem eine Vergleichmäßigung der Qualität der hergestellten Hohlglasartikel erreicht werden soll. Es handelt sich jedoch nicht um ein online wirksames Verfahren, so dass eingeleitete Korrekturmaßnahmen erst mit einer zeitlichen Verzögerung wirksam werden können.

Im Zuge einer verbesserten Rechnerkapazität gewinnen Verfahren der computergestützen Bildauswertung als Grundlage für eine Regelung der Maschineneinstellungen bei Glasformmaschinen zunehmend an Bedeutung, da sie eine Einbeziehung zahlreicher Einflussgrößen in den Regelalgorithmus ermöglichen.

Aus der US 2004/194506 A1 sind ein Verfahren und eine Vorrichtung zur Regelung der Qualität von Glastropfen als Grundlage für die Herstellung von Hohlglasartikel in einer Glasformmaschine bekannt, wobei ein Glastropfen im freien Fall mittels einer oder mehreren Kameras unter Generierung eines eine dreidimensionale Struktur beschreibenden Datensatzes erfasst wird, dieser Datensatz hinsichtlich Volumen, Oberflächengestalt, Länge, Dicke, Schnittfläche usw. des Glastropfens mit einem entsprechenden gespeicherten Standarddatensatz verglichen wird, und wobei nach Maßgabe dieses Vergleichs, insbesondere der Art der festgestellten Abweichungen in solche Maschineneinstellungen eingegriffen wird, welche die Tropfenbildung beeinflußen. Das Ziel dieser Tropfenformung besteht darin, einen Tropfen mit konstantem Gewicht, konstanter Form und von konstanter Temperatur zu erzeugen. Die diesen drei Merkmalen bzw. Messgrößen des Tropfens eindeutig zugeordneten Stellgrößen sind allgemein be-kannt, so dass die Situation einer klassischen Regelung gegeben ist und insoweit ein Sollzustand definierbar ist, demgegenüber Abweichungen feststellbar und ausregelbar sind. Es geht mithin überhaupt nicht um die Regelung der Prozessparameter einer Glasformmaschine schlechthin, nämlich soweit diese den Formgebungsprozess eines Hohlglasartikels beeinflussen, sondern nur um einen Teilaspekt, der aufgrund eines eindeutigen funktionellen Zusammenhangs zwischen Mess- und Stellgrößen einer klassischen Regelung ohne weiteres zugänglich ist.

Aus der EP 0 574 349 A1 ist ein auf Sensoren in der Form von IR-Kameras, CCD-Kameras etc. gestütztes Überwachungsverfahren für den Produktionsablauf einer Glasformmaschine bekannt, welches insbesondere auf Fehlerquellen im Bereich des Schneidemechanismus für einen Glastropfen, des Schließmechanismus der Form, des Trichtermechanismus für die Zufuhr der Glasschmelze, des Pegelmechanismus für die Glasschmelze sowie die Absetzplatte gerichtet ist. Die von den vor einem Erwärmer mittels der Sensoren erstellten Bildsignale werden computerunterstützt ausgewertet und es werden diese Informationen zur Behebung eventuell festgestellter Mängel umgesetzt. Es ist dies eine Regelung von Maschineneinstellungen ausgehend von einem Sollzustand dieser Einstellungen.

Schließlich ist ein weiteres auf einer computergestützten Bildauswertung basierendes, hier zur Analyse von Bewegungsabläufen bestimmtes Überwachungssystern für ein Glasformmaschine aus der DE 10 2009 005 433 A1 bekannt. Hierbei sind entlang der mehreren I.S.-Stationen eine oder mehrere Hochgeschwindigkeitskameras verschieb- oder schwenkbar angeordnet, deren Bildfolge als Grundlage zur Ermittlung von Abweichungen von Konstruktionsdaten, für vorbeugende Wartungs- und Instandhaltungsarbeiten, zur Erkennung eines aktuellen Verschleißzustands, zur Minderung von Totzeiten und schließlich zu steuerungstechnischen Eingriffen in den Prozessablauf benutzt wird, u. a. mit dem Ziel, Verlustzeiten zu vermeiden, Schäden bereits in einem frühen Stadium zu erkennen und insgesamt eine Durchsatzsteigerung zu erreichen.

Aus der DE 101 16 099 A1 sind ein Verfahren und eine Vorrichtung zum automatisierten Herstellen eines geblasenen Glaskörpers bekannt, wobei mittels eines Tauchrohrs eine definierte Menge schmelzflüssigen Glases einer Schmelze entnommen wird und wobei anschließend der Blasvorgang nach Maßgabe einer vorgegebenen Blasdruckkurve p(T) durchgeführt wird. Mittels einer Kamera kann während des Blasvorgangs die Geometrie des entstehenden Glaskörpers überwacht werden. In Ermangelung einer Form eignet sich dieses Verfahren sowie die Vorrichtung nicht allgemein zur Herstellung von Hohlglasartikeln.

Dieser Stand der Technik lässt erkennen, dass man bisher bemüht war, eine Vergleichmäßigung der Produktqualität anhand einer Analyse von Betriebsparametern der Glasformmaschine wie z. B. der Formwerkzeuge, der zu formenden Glastropfen bzw. anhand von Fehlern des Glasartikels in der Form von Spalt- oder Rissfehlern darzustellen. Auf diesem Wege festgestellte, nicht zu tolerierende Fehlentwicklu ngen sind jedoch stets nur für deren Korrektur herangezogen worden, soweit zwischen diesen und den neu einzustellenden Betriebsparametern ein funktionaler Zusammenhang besteht. Ausgangspunkt ist eine Messung von Temperaturen im Bereich der Formwerkzeuge, von Kühlluftströmen oder auch von charakteristischen, einen Glastropfen beschreibenden Parametern sowie von Bewegungsverhältnissen.

Nicht berücksichtigt in diesem Zusammenhang werden Eigenschaften des hergestellten Hohlglasartikels, z. B. gestaltliche Abweichungen gegenüber einer Referenzgestalt, wobei dessen u. a. von der Massenverteilung abhängige, durch vergleichsweise hohe Temperaturen am Ende des Formgebungsprozesses noch verminderte mechanische Stabilität zu berücksichtigen ist. Beispielsweise ergibt sich in Abhängigkeit von der Art des Hohlglasartikels stets ein diesem eigenes temperaturabhängiges Verformungsverhalten.

Es ist die Aufgabe der Erfindung, ein Verfahren der eingangs bezeichneten Art mit Hinblick auf eine gezielte, insbesondere Eigenschaften des herzustellenden Hohlglasartikels einbeziehende Regelung von Prozessparametern einer Glasformmaschine auszugestalten, welches u. a. als Grundlage einer Qualitätssicherung, jedoch auch für eine verbesserte Ausnutzung der Leistungsfähigkeit des Formgebungsprozesses nutzbar ist. Gelöst ist diese Aufgabe bei einem solchen Verfahren durch die Merkmale des Kennzeichnungsteils des Anspruchs 1.

Erfindungswesentlich ist hiernach, dass der Zustand des hergestellten Hohlglasartikels unmittelbar im Anschluss an seine Formgebung den Ausgangspunkt des erfindungsgemäßen Regelungsverfahrens bildet. Diese Formgebung vollzieht sich beispielsweise bei einer I.S. Glasformmaschine ausgehend von einem hinsichtlich seiner Masse und seiner das Fließ- bzw. Verformungsverhalten bestimmenden Temperatur bemessenen Glastropfen in einem zweistufigen Formgebungsprozess und endet auf einer Absetzplatte, von der abschließend geformte Artikel mittels eines Förderbandes in einen Kühlofen überführt werden. Die erfindungsgemäße bildliche Erfassung des Artikels wird vorzugsweise an den auf dem Förderband aufstehenden Artikeln durchgeführt und zielt darauf ab, jegliche geometrische Verzerrungen, Taumelfehler und dergleichen erkennbar zu machen und einer Auswertung zuzuführen.

Zweckmäßig mit Hinblick auf eine erforderliche Genauigkeit ist der Einsatz zumindest einer Kamera mit einer Messgenauigkeit von < 0,01 mm. Da die Vermessung der Gestalt des hergestellten Artikels somit unmittelbar im Anschluss an die Formgebung durchgeführt wird, kann bei festgestellten Abweichungen von einer Referenzgestalt mit einer minimalen Verzögerung in den Formgebungsprozess zwecks Korrektur eingegriffen werden. Störgrößen für eine Regelung sind z. B. vom Tagesverlauf sowie der Jahreszeit abhängige Schwankungen der Kühllufttemperatur.

Eine Vermessung sollte in jedem Fall so weit möglich in unmittelbarem Anschluss an den Formgebungsprozess durchgeführt werden, somit noch während eines thermisch bedingten instabilen Zustands des Artikels. Letzteres lässt zum Zweck der Vermessung eine zwar wünschenswerte Rotation des Artikels um seine Längsachse regelmäßig nicht zu, und zwar auch unter Berücksichtigung steigender Durchsätze des Formgebungsprozesses, welche als solche bereits hohe mechanische Beanspruchungen des Artikels mit sich bringen.

Die Vermessung des Artikels wird mittels mehrerer, beispielsweise drei um den Artikel gleichförmig verteilt und ortsfest angeordneter Kameras durchgeführt, und zwar vorzugsweise in einer auf dem Förderband aufstehenden Position. Andere Positionen, insbesondere dann, wenn sie unmittelbar dem Ende des Formgebungsprozesses zugeordnet sind, werden jedoch nicht ausgeschlossen.

Aufgrund des komplexen Zusammenhangs zwischen dem Ergebnis der Formgebung und den jeweils aktuellen Einstellungen der Prozessparameter ist vorteilhafterweise ein Speichermedium in das Regelungsverfahren eingebunden, welches den funktionellen Zusammenhang zwischen den Werten der Prozessparameter und bestimmten gestaltlichen Änderungen des Artikels beschreibt. Dieses die Funktion einer Datenbank erfüllende Speichermedium enthält somit ein, das Verformungsverhalten des Artikels in Abhängigkeit von zahlreichen Einflussgrößen beschreibendes mechanisches Modell und bildet somit die Grundlage für regelungstechnische Eingriffe in Abhängigkeit von der Art festgestellter gestaltlicher Abweichungen des Artikels.

In dem Speichermedium ist ein Muster der Deformation des Artikels in Abhängigkeit von den Werten der Prozessparameter gespeichert, somit ein das Verformungsverhalten des Hohlglasartikels beschreibendes mechanisches Modell. Ein solches Modell bzw. Muster kann auf empirischem Wege ermittelt werden und beschreibt letztendlich die Korrelation einer bestimmten Deformation des Artikels zu den jeweils aktuellen Einstellungen der Prozessparameter. Es ist festgestellt worden, dass abhängig von der Art des hergestellten Artikels, beispielsweise dessen Massenverteilung, den aktuellen Einstellungen der Prozessparameter und dem Verformungsverhalten des Artikels am Ende des Formgebungsprozesses ein funktionaler Zusammenhang besteht, der regelungstechnisch zur Korrektur festgestellter gestaltlicher Abweichungen der gestalt des Hohlglasartikels gegenüber einem Referenzartikel nutzbar ist.

Das Verfahren ist online verwendbar und daher als Grundlage für eine automatische Regelung der Prozessparameter des Formgebungsprozesses nutzbar, beispielsweise mit dem Ziel, verschleißbedingten Änderungen, jedoch auch Schwankungen der Umgebungsbedingungen schnell und wirksam mit dem Ziel der Sicherung einer konstanten Produktqualität begegnen zu können.

Zur weiteren Verbesserung der eingangsseitigen Information über den hergestellten Hohlglasartikel ist gemäß den Merkmalen des Anspruchs 2 vorgesehen, zusätzlich zu einer Abbildung im sichtbaren Bereich auch eine solche im IR-Bereich heranzuziehen. Diese kann beispielsweise zur Erkennung der Massenverteilung des Glases benutzt werden, so dass in Verbindung mit einer Referenzabbildung im IR-Bereich auch eine automatische Anpassung der Prozessparameter an unterschiedliche Hohlglasartikel darstellbar ist. Eine Auswertung von IR-Informationen kann in Verbindung mit den jeweils aktuellen Einstellungen der Prozessparameter vorgenommen werden, um eine breitere Grundlage für regelungstechnische Eingriffe benutzt werden.

Es ist ferner die Aufgabe der Erfindung, eine Verwendung für das vorstehend dargestellte Verfahren zu entwerfen, die den Betrieb einer Glasformmaschine weitergehend automatisiert gestaltet und unabhängig von manuellen Eingriffen und der diesen zugrunde liegenden Erfahrungswerte macht. Gelöst ist diese Aufgabe durch die Merkmale des Anspruchs 3.

Das erfindungsgemäße Verfahren wird hiernach zur Optimierung der Einstellungen der Prozessparameter benutzt, indem iterativ ein optimaler Wert eines Prozessparameters erreicht wird, wobei Änderungen der Gestalt des Artikels durch die Regelung der anderen Prozessparameter kompensiert werden. Schwankende Werte einzelner Prozessparameter können auf diesem Wege bis zum Erreichen einer Systemgrenze, z. B. einer Stabilitätsgrenze verändert werden, ohne dass der bei manuellen Eingriffen unvermeidbare Sicherheitsabstand beachtet werden muss.

Entsprechend den Merkmalen des Anspruchs 4 kann beispielsweise die Schnittzahl des Formgebungsprozesses der zu optimierende, insbesondere zu maximierende Prozessparameter sein.

Man erkennt, dass mit der Erfindung neben einer automatisierten Regelung des Formgebungsverfahrens beispielsweise einer I.S.-Maschine eine verbesserte wirtschaftliche Ausnutzung deren Produktionskapazität dadurch erreichbar ist, dass die Schnittzahl bis zum Erreichen der Stabilitätsgrenze erhöht werden kann.

Man erkennt ferner, dass aufgrund des Umstands, dass eine festgestellte Abweichung von einer Referenzgestalt des Artikels, nämlich der Art einer Deformation diese umgekehrt zur Korrektur der Einstellungen der infrage kommenden Prozessparameter benutzt wird. Auf diesem Wege ist ein qualitativ besseres, nach Maßgabe der Geschwindigkeit eines Eingriffs infolge festgestellter Abweichungen schnell erreichbares, durch ein im Vergleich zum Stand der Technik engeres Toleranzband hinsichtlich gestaltlicher Abweichungen gekennzeichnetes Arbeitsergebnis darstellbar. Diese rückgekoppelte Qualitätskontrolle trägt ebenfalls zu einer verbesserten wirtschaftlichen Ausnutzung bei.

## Patentansprüche

1. Verfahren zur Regelung der Prozessparameter einer zur Herstellung von Hohlglasartikeln bestimmten Maschine, wobei die Gestalt des hergestellten Hohlglasartikels unmittelbar nach dessen Formgebung online vermessen wird, wobei die Vermessung mittels mehrerer um den, auf einem Förderband aufstehenden Hohlglasartikel gleichförmig verteilt angeordneter Kameras durchgeführt wird, wobei Abweichungen gegenüber einer Referenzgestalt festgestellt werden, und wobei der Regelung diese Abweichungen zugrunde gelegt werden, **dadurch gekennzeichnet, dass** der Regelung ein das Verformungsverhalten des Hohlglasartikels beschreibendes mechanisches, den funktionellen Zusammenhang zwischen einem bestimmten Muster einer Deformation des Hohlglasartikels und einer Einstellung von Prozessparametern darstellendes Modell enthaltendes Speichermedium zugrunde gelegt wird, und dass ein Eingriff in die Einstellungen von Prozessparametern nach Maßgabe der Art der festgestellten Deformationen erfolgt.

2. Verfahren nach Anspruch 1, **dadurch gekennzeichnet, dass** zusätzlich zu einer optischen Abbildung des Artikels ein IR-Bild aufgenommen und der Regelung zugrunde gelegt wird.

3. Verwendung des Verfahrens nach einem der Ansprüche 1 oder 2 zur Optimierung der Einstellungen der Prozessparameter des Formgebungsprozesses, wobei eine schrittweise Annäherung der Einstellung zumindest eines Prozessparameters an einen optimalen Wert durchgeführt wird und wobei festgestellte Abweichungen der Gestalt des Hohlglasartikels durch Nachregeln der Einstellungen der anderen Prozessparameter kompensiert werden.

4. Verwendung nach Anspruch 3, wobei die Schnittzahl des Formgebungsprozesses optimiert, insbesondere maximiert wird.

## Claims

1. Method of controlling the process parameters of a machine intended for producing hollow glass articles, wherein the shape of the hollow glass article produced is measured on-line immediately after shaping thereof, wherein the measurement is conducted by means of a plurality of cameras which are arranged distributed uniformly about the hollow glass article standing on a conveyor belt, wherein deviations with respect to a reference shape are detected and wherein the control procedure is based upon these deviations, **characterised in that** the control procedure is based upon storage medium which contains a mechanical model which describes the deformation behaviour of the hollow glass article and depicts the functional correlation between a specific pattern of a deformation of the hollow glass article and a setting of process parameters, and **in that** an intervention in the settings of process parameters is effected in accordance with the type of deformations detected.

2. Method as claimed in claim 1, **characterised in that** in addition to an optical image of the article an IR image is recorded and used as a basis for the control procedure.

3. Use of the method as claimed in any one of claims 1 or 2 for optimising the settings of the process parameters of the shaping process, wherein a stepwise approximation of the setting of at least one process parameter to an optimum value is performed and wherein detected deviations in the shape of the hollow glass article are compensated for by readjustment of the settings of the other process parameters.

4. Use as claimed in claim 3, wherein the number of cuts of the shaping process is optimised, in particular is maximised.

## Revendications

1. Méthode de régulation des paramètres de processus d'une machine destinée à la fabrication d'articles en verre creux, dans laquelle la forme de l'article en verre creux fabriqué est mesurée en ligne immédiatement après son formage, dans laquelle le mesurage est réalisé au moyen de plusieurs caméras réparties uniformément autour de l'article en verre creux se tenant debout sur un convoyeur, dans laquelle des écarts par rapport à une forme de référence sont constatés, et dans laquelle la régulation est fondée sur ces écarts, **caractérisée en ce que** la régulation est fondée sur un support de stockage contenant un modèle mécanique décrivant le comportement de déformation de l'article en verre creux, représentant la relation fonctionnelle entre un motif déterminé d'une déformation de l'article en verre creux et un réglage de paramètres de processus, et **en ce qu'**une intervention dans les réglages de paramètres de processus se fait conformément au type de déformations constatées.

2. Méthode selon la revendication 1, **caractérisée en ce que**, en plus d'une représentation optique de l'article, une image IR est prise et sert de base à la régulation.

3. Utilisation de la méthode selon l'une quelconque des revendications 1 ou 2 pour l'optimisation des réglages des paramètres de processus du processus de formage dans laquelle une approche progressive du réglage d'au moins un paramètre de processus d'une valeur optimale est réalisée et dans laquelle des écarts constatés de la forme de l'article en verre creux sont compensés par une nouvelle régulation des réglages des autres paramètres de processus.

4. Méthode selon la revendication 3, dans laquelle le nombre de coupes du processus de formage est optimisé, en particulier est maximisé.
